# EUROPÄISCHE PATENTSCHRIFT

(11) **EP 4 027 147 B1**
(45) Veröffentlichungstag und Bekanntmachung des Hinweises auf die Patenterteilung: **14.05.2025**
(21) Anmeldenummer: 21216237.4
(22) Anmeldetag: 21.12.2021
(51) Int. Cl.: G01N 35/00

(54) **ABFALLTRENNSYSTEM**
WASTE SEPARATION SYSTEM
SYSTÈME DE TRI DES DÉCHETS

(30) Priorität: 12.01.2021 EP 21151074
(43) Veröffentlichungstag der Anmeldung: 13.07.2022
(73) Patentinhaber: Siemens Healthcare Diagnostics Products GmbH, 35041 Marburg (DE)
(72) Erfinder: Buchwald, Markus, 65760 Eschborn (DE); Kalbfell, Heiko, 65232 Taunusstein (DE); Knies, Brigitte, 64665 Alsbach (DE); Michels, Thorsten, 64521 Gross-Gerau (DE)
(74) Vertreter: Siemens Healthineers Patent Attorneys

(56) Entgegenhaltungen:
- WO-A1-2019/176136
- WO-A1-2020/129462
- JP-A- H08 254 537
- US-A1- 2006 153 736

## Beschreibung

Der Gegenstand der Erfindung ist ein Abfalltrennsystem für einen automatisch arbeitenden Analysator und liegt auf dem technischen Gebiet der automatischen Analysegeräte für die in-vitro Diagnostik.

Zahlreiche Nachweis- und Analyseverfahren zur Bestimmung physiologischer Parameter in Körperflüssigkeitsproben oder anderen biologischen Proben werden heute automatisiert in großer Anzahl in automatischen Analysegeräten, auch so genannten in vitro-Diagnostiksystemen, durchgeführt.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

Es ist bekannt, dass in automatisch arbeitenden Analysatoren, die zur Untersuchung von biologischen Körperflüssigkeiten eingesetzt werden, die benötigten Reagenzien z.B. mittels einer Pipettiervorrichtung mit einer Pipettiernadel in eine Messküvette eingefüllt werden. Die Messküvette kann dabei teilweise z.B. mit einem Küvettengreifer innerhalb des automatischen Analysegerätes zu verschiedenen Positionen mittels eines Robotorarms automatisch verfahren werden, der Teil einer Robotorstation ist. Nach der Messung wird die benutzte Messküvette z.B. leergepumpt und gereinigt für eine Widerverwendung, oder zur Entsorgung, ggf. zusammen mit den Probenbestandteilen, in einen Abfallbehälter verbracht zur Entsorgung.

Gewöhnlich fällt in solchen Analysatoren also auch flüssiger, meist potenziell hoch infektiöser, Abfall an, der verschiedenste Inhaltsstoffe enthält. Insbesondere können auch Festkörper, wie z.B. Mikroplastikpartikel aus Reagenzien, die z.B. Latexpartikel enthalten, im Abfall vorliegen. Solche Mikroplastikpartikel können insbesondere unter Umweltschutzgesichtspunkten sehr kritisch zu bewerten sein, da Mikroplastikpartikel teilweise nicht in Kläranlagen klärbar sind.

Bisher wurde bei Analysegeräten gewöhnlich das komplette Abwasser in Kanister oder direkt in ein Laborabwassersystem geleitet. Der Flüssigabfall wird z.B. aus Waschstationen und Küvetten direkt in einen Abfallbehälter des Analysegeräts oder das Laborabwassersystem gepumpt. Alternativ ist teilweise auch vorgesehen, dass Küvetten inklusive ihres flüssigen Inhaltes in den Festkörper-Abfallbehälter entsorgt werden. Eine gesonderte Behandlung der verschiedenen Inhaltsstoffe findet nicht statt.

JPH08254537 und US2006/153736 offenbaren ein Abfalltrennungssystem, bei dem verschiedene Abfallflüssigkeiten durch ein Ventilsystem in verschiedene Abfallbehälter getrennt werden.

Es ist daher Aufgabe der Erfindung, eine verbesserte Prozessierung von Abfällen in automatischen Analysegeräten zur Verfügung zu stellen, welche insbesondere eine umweltfreundlichere Entsorgung der anfallenden Abfälle einschließlich der Abwässer ermöglicht.

**Diese Aufgabe wird erfindungsgemäß durch die im Folgenden beschriebenen Gegenstände und Verfahren gelöst.**

Es wurde gefunden, dass eine verbesserte Prozessierung von Abfällen und insbesondere Abwässern in automatischen Analysegeräten erreicht werden kann, wenn der Abfall mittels eines Abfalltrennsystems erfindungsgemäß in verschiedene Abfallklassen getrennt wird.

Die Erfindung geht dabei von der Überlegung aus, dass Abfall, der unter Umweltgesichtspunkten besonders problematische Inhaltsstoffe enthält, wie z.B. Mikroplastikpartikel aus speziellen Reagenzien, separat in Spezialbehältern aufgefangen werden soll, damit das Abwassersystem des Labors nicht insgesamt mit solchen Stoffen belastet wird. Um dabei das anfallende Volumen von Abfall mit besonders problematischen Inhaltsstoffen so gering wie möglich zu halten, soll möglichst wenig mit solchen Stoffen belastetes Abwasser, in die entsprechenden Spezialbehälter fließen. Das in den Spezialbehältern aufgefangene Abwasser soll dann separat einer umweltgerechten Entsorgung zugeführt werden.

Dies hat den Vorteil, dass die Umweltbelastung durch entsprechend mit z.B. Mikroplastikpartikeln aus Reagenzien belasteten Abwässern minimiert wird und insbesondere das Volumen an belasteten Abwässern stark reduziert werden kann, da häufig nur ein Teil der Proben bzw. Reagenzansätze entsprechende belastende Inhaltsstoffe aufweisen.

Weiter hat dies den Vorteil, dass nun ausschließlich die belasteten Abwässer gezielt einer speziellen, umweltgerechten Entsorgung zugeführt werden können. Daraus ergeben sich auch Kostenvorteile aufgrund des effektiv reduzierten Volumens solcher Abwässer und der anfallenden Abfälle insgesamt.

Weiter ist vorteilhaft, dass erfindungsgemäß regulatorische Abwasseranforderungen, die z.B. als landesspezifische Auflagen bestehen können, erleichtert erfüllbar sind.

Weiter ist außerdem vorteilhaft, dass erfindungsgemäß Abfälle oder Teile der Abfälle erleichtert einem geeignetem Recycling zugeführt und z.B. wiederverwertet werden können, was insbesondere auch bei metallischen Mikropartikeln besondere Vorteile bietet.

Gegenstand der vorliegenden Erfindung ist insbesondere ein Abfalltrennsystem zum Trennen von Abfall für ein automatisches Analysegerät. Das Abfalltrennsystem umfasst einen ersten Abfallbehälter und einen zweiten Abfallbehälter, eine Abfallverbringvorrichtung zum Verbringen von Abfall in den ersten oder den zweiten Abfallbehälter und eine Steuervorrichtung zur Steuerung der Abfallverbringvorrichtung. Die Steuervorrichtung ist so konfiguriert, dass die Abfallverbringvorrichtung Abfall einer ersten Abfallklasse in den ersten Abfallbehälter verbringt und Abfall einer zweiten Abfallklasse in den zweiten Abfallbehälter verbringt.

Bei dem ersten und zweiten Abfallbehälter handelt es sich also um zwei jeweils separate Abfallbehälter. Insbesondere umfasst der erste Abfallbehälter nicht den zweiten Abfallbehälter. Weiter umfasst insbesondere der zweite Abfallbehälter nicht den ersten Abfallbehälter.

Die Steuervorrichtung ist weiter so konfiguriert, dass Abfall der ersten Abfallklasse nicht in den zweiten Abfallbehälter (3) und/oder Abfall der zweiten Abfallklasse nicht in den ersten Abfallbehälter (2) gelangt.

Dies hat den Vorteil, dass Abfälle der ersten und der zweiten Abfallkasse getrennt voneinander im System prozessiert werden und es zu keinem Zeitpunkt zu einer unvorteilhaften Vermischung der Abfälle verschiedener Abfallklassen kommt. Dies bewirkt insbesondere, dass ein späteres, häufig sehr aufwändiges oder überhaupt nur noch schwer oder nicht mögliches Trennen von Abfällen von vorneherein vermieden wird.

Bevorzugt umfasst der Abfall der ersten Abfallklasse und/oder Abfall der zweiten Abfallklasse flüssigen Abfall, z.B. in Form von Dispersionen, oder es handelt sich bevorzugt ausschließlich um flüssigen Abfall.

Bevorzugt enthält der Abfall der ersten Abfallklasse und/oder Abfall der zweiten Abfallklasse nichtklärbare Stoffe.

Bevorzugt enthält Abfall der ersten Abfallklasse Festkörperpartikel wie z.B. Mikroplastikpartikel und/oder Latexpartikel und wobei bevorzugt Abfall der zweiten Abfallklasse frei von Festkörperpartikeln ist. Bevorzugt ist es dabei ausreichend, wenn der Abfall im Wesentlichen frei von Festkörperpartikeln ist. Abfall ist im Wesentlichen frei von Festkörperpartikeln, wenn der Abfall beispielsweise weniger als 0,01, bevorzugt weniger als 0,001, besonders bevorzugt weniger als 0,0001 Gewichtsprozent Festkörperpartikel enthält. Abfall der ersten Abfallklasse enthält beispielsweise wenigstens 0,0001, bevorzugt wenigstens 0,001, besonders bevorzugt wenigstens 0,01 Gewichtsprozent Festkörperpartikel. Gewichtsprozent bezeichnet dabei den prozentualen Massenanteil. Die Massenanteile aller Bestandteile des Abfalls addieren sich dabei zu 100 Prozent.

Bevorzugt umfasst die Abfallverbringvorrichtung ein Schlauchsystem und/oder Rohrsystem.

Bevorzugt umfasst die Abfallverbringvorrichtung mindestens ein Ventil, das mittels der Steuervorrichtung steuerbar ist.

Die Abfallverbringvorrichtung umfasst einen automatisch steuerbaren Küvettengreifer und/oder eine automatisch steuerbare Pipettiervorrichtung.

Abfall der ersten Abfallklasse und/oder der zweiten Abfallklasse befindet sich beim Verbringen des Abfalls in den ersten oder den zweiten Abfallbehälter wenigstens teilweise, bevorzugt vollständig in einer Küvette, einer Pipettenspitze und/oder einem anderen Gefäß.

Der Abfall der ersten Abfallklasse und/oder der zweiten Abfallklasse wird zusammen mit der Küvette, der Pipettenspitze und/oder dem Gefäß in den ersten oder den zweiten Abfallbehälter verbracht. Dies hat den Vorteil, dass Arbeitsschritte eingespart werden können und der Abfall der ersten Abfallklasse nicht aus den entsprechenden Behältnissen entfernt werden muss, sondern mit diesen zusammen entsorgt werden kann.

Bevorzugt werden ausschließlich Dispersionen und/oder flüssige Abfälle in die Abfallbehälter verbracht. Dies hat den Vorteil, dass das Volumen des belasteten Abfalls weiter auf ein Minimum reduziert werden kann, da Küvetten, Pipettenspitzen und/oder andere Gefäße, in denen sich die Abfälle befunden hatten, separat entsorgt und/oder wiederverwertet werden können.

Bevorzugt handelt es sich bei der Küvette, der Pipettenspitze und/oder dem Gefäß um Verbrauchsartikel, die bevorzugt zur einmaligen Verwendung in einem automatischem Analysegerät ausgestaltet sind. Dies hat den Vorteil, dass eine aufwändige Reinigung der Behältnisse vermieden wird. Weiter wird hierdurch die Sicherheit hinsichtlich z.B. Verschleppungen zwischen verschiedenen Proben verringert.

Ein weiterer Gegenstand der Erfindung ist ein automatisches Analysegerät umfassend ein erfindungsgemäßes Abfalltrennsystem.

Das Analysegerät umfasst weiter vorteilhafterweise mindestens eine automatisch steuerbare Pipettiervorrichtung, einen automatisch steuerbaren Küvettengreifer und/oder mindestens eine Messeinrichtung zum optischen und/oder elektronischen quantitativen und/oder qualitativen Nachweis von mindestens einem Analyten in einer Probe.

Ein weiterer Gegenstand der Erfindung ist ein Verfahren zum Trennen von Abfall in einem automatisches Analysegerät gemäß Anspruch 10.

Bevorzugt ist die Steuervorrichtung weiter so konfiguriert, dass Abfall der ersten Abfallklasse nicht in den zweiten Abfallbehälter (3) und/oder Abfall der zweiten Abfallklasse nicht in den ersten Abfallbehälter (2) gelangt.

Bevorzugt ist das Abfalltrennsystem in dem Verfahren als ein erfindungsgemäßes Abfalltrennsystem ausgestaltet.

Bevorzugt ermittelt die Steuervorrichtung mittels Informationen aus einer Datenbank, ob Abfall der ersten Abfallklasse oder Abfall der zweiten Abfallklasse vorliegt.

Bevorzugt erhält die Steuervorrichtung Informationen, dass belastete Materialien, z.B. Reagenzien, in dem automatischen Analysegerät verarbeitet werden. Bevorzugt kann dies z.B. mittels automatisiertem Auslesen von Etiketten von Reagenzbehältern erfolgen, wobei die Etiketten z.B. Informationen umfassen, dass Mikroplastikpartikel in dem Reagenz enthalten sind.

Bei den Etiketten handelt es sich bevorzugt um Etiketten, die einen visuell mittels z.B. einer Kamera und/oder einem Scanner auslesbaren Barcode umfassen.

Bevorzugt handelt es sich bei den Etiketten um Etiketten, die einen Radio-frequency identification (RFID) Chip umfassen, der mittels einer Auslesevorrichtung elektronisch ausgelesen werden kann. Bevorzugt umfasst eine in dem RFID Chip gespeicherte Information die Information, dass Mikroplastikpartikel in dem Reagenz enthalten sind.

Bevorzugt werden die Informationen, dass belastete Materialien, z.B. Reagenzien, in dem automatischen Analysegerät verarbeitet werden, in der Datenbank gespeichert, bevorzugt in der Steuervorrichtung. Bevorzugt umfassen die Informationen, dass belastete Materialien in dem automatischen Analysegerät verarbeitet werden, die Information, welche Reagenzbehälter belastete Materialien enthalten.

Bevorzugt wird bei Entnahme von Flüssigkeit aus einem Reagenzbehälter, der belastete Materialien enthält, und Transfer der Flüssigkeit in ein weiters Gefäß, dieses weitere Gefäß in der Datenbank als ein Gefäß markiert, das belastete Materialien enthält.

Bevorzugt erfolgt die Entnahme von Flüssigkeit aus einem Reagenzbehälter, der belastete Materialien enthält, und Transfer der Flüssigkeit in das weitere Gefäß mittels einer automatischen Pipettiervorrichtung.

Bevorzugt wird bei Entsorgung von Flüssigkeit aus einem in der Datenbank markiertem Gefäß, das belastete Materialien enthält, diese Flüssigkeit mittels der Steuervorrichtung Abfall der ersten Abfallklasse zugeordnet und bei der Entsorgung, bevorzugt mittels der Abfallverbringvorrichtung, in den ersten Abfallbehälter verbracht.

In einer bevorzugten Ausführung der Erfindung wird beim Absaugen von Flüssigkeit aus einem in der Datenbank markiertem Gefäß, das belastete Materialien enthält, ein Ventil im Absaugsystem mittels der Steuervorrichtung so geschaltet, dass vom Standard-Abfallbehälter in einen Sonderbehälter umgeschaltet wird.

Bevorzugt nimmt das automatische Analysegerät also Informationen zu Umweltgefahrstoffen auf und verfolgt die Verbringung dieser Stoffe mittels der Steuervorrichtung innerhalb des Analysegeräts, um diese Stoffe, sowie mit diesen Stoffen im Zuge der Analysen vermischte, weitere Stoffe dann gesondert zu entsorgen.

Ein weiterer Gegenstand der Erfindung ist eine Verwendung eines erfindungsgemäßen Abfalltrennsystems und/oder eines erfindungsgemäßen Verfahrens in einem automatischen Analysegerät.

Unter dem Begriff "Festkörperpartikel" wird bevorzugt eine partikuläre Festphase verstanden.

Unter dem Begriff "partikuläre Festphase" sind im Sinne dieser Erfindung nicht-zelluläre Teilchen zu verstehen. Die nicht-zelluläre Teilchen weisen dabei beispielsweise einen ungefähren Durchmesser von wenigstens 1 nm und nicht mehr als 5000 µm auf. Die Mikropartikel können regelmäßig oder unregelmäßig geformt sein. Sie können Kugeln, Sphäroide, Kugeln mit mehr oder weniger großen Kavitäten oder Poren darstellen. Weiter können Mikropartikel Fasern sein mit einer Länge und einem Durchmesser, wobei die Länge 3 nm bis 15000 µm beträgt und wobei das Verhältnis Länge zu Durchmesser größer als 3 ist. Die Mikropartikel können aus organischem, aus anorganischem Material oder aus einer Mischung oder einer Kombination von beiden bestehen. Sie können aus einem porösen oder nicht porösen, einem schwellfähigen oder nicht schwellfähigen Material bestehen. Prinzipiell können die Mikropartikel jegliche Dichte haben, bevorzugt sind jedoch Partikel mit einer Dichte, die der Dichte des Wassers nahe kommt, wie etwa 0,7 bis etwa 1,5 g/ml. Die bevorzugten Mikropartikel sind in wässrigen Lösungen suspendierbar und möglichst lange suspensionsstabil. Sie mögen durchsichtig, teilweise durchsichtig oder undurchsichtig sein. Die Mikropartikel können aus mehreren Schichten bestehen wie beispielsweise die sogenannten "core-and-shell" Partikel mit einem Kern und einer oder mehreren umhüllenden Schichten. Der Begriff Mikropartikel umfasst beispielsweise Farbstoffkristalle, Metallsolen, Silica-Partikel, Glaspartikel und Magnetpartikel. Bevorzugte Mikropartikel sind in wässrigen Lösungen suspendierbare und aus wasserunlöslichem Polymermaterial bestehende Partikel, insbesondere aus substituierten Polyethylenen. Ganz besonders bevorzugt sind Latexpartikel z.B. aus Polystyrol, Acrylsäurepolymeren, Methacrylsäurepolymeren, Acrylnitril-Polymeren, Acrylnitril-Butadien-Styrol, Polyvinylacetat-Acrylat, Polyvinylpyridin, Vinylchlorid-Acrylat. Von besonderem Interesse sind Latexpartikel mit reaktiven Gruppen an ihrer Oberfläche wie beispielsweise Carboxyl-, Amino- oder Aldehydgruppen, die eine kovalente Bindung eines anti-TNFalpha-Bindungspartners an die Latexpartikel erlauben. Bevorzugt können die Mikropartikel weiter auch Additive oder andere hinzugefügte Stoffe umfassen. Humane, tierische, pflanzliche oder pilzliche Zellen oder Bakterien sind im Sinne dieser Erfindung explizit nicht von dem Begriff "partikuläre Festphase" umfasst.

Unter einer "Probe" ist im Sinne der Erfindung das Material zu verstehen, dass die nachzuweisende Substanz (den Analyten) vermutlich enthält. Der Begriff "Probe" umfasst insbesondere biologische Flüssigkeiten von Menschen oder Tieren, wie z.B. Blut, Plasma, Serum, Sputum, Exsudat, bronchoalveoläre Lavage, Lymphflüssigkeit, Synovialflüssigkeit, Samenflüssigkeit, Vaginalschleim, Feces, Urin, Liquor, aber auch z.B. durch Homogenisation oder Zelllyse für die photometrische, bevorzugt nephelometrische Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Bei einem quantitativen Nachweis wird die Menge, die Konzentration oder die Aktivität des Analyten in der Probe gemessen. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

Bei einer Messküvette handelt es sich beispielsweise um eine Küvette oder ein Reaktionsgefäß aus Glas, Kunststoff oder Metall. Vorteilhafterweise ist die Messküvette aus optisch transparenten Materialien gefertigt, was besonders beim Einsatz von optischen Analyseverfahren vorteilhaft sein kann. Die Begriffe "Messküvette" und "Küvette" werden synonym verwendet.

### Die Erfindung wird anhand von Zeichnungen exemplarisch näher erläutert. Darin zeigen:

FIG 1 schematisch den Aufbau eines Abfalltrennsystems (1), das nicht unter die beanspruchte Erfindung fällt, zum Trennen von Abwässern umfassend einen ersten Abfallbehälter (2) und einen zweiten Abfallbehälter (3),
FIG 2 schematisch ein Flussidagramm betreffend die Prozessierung von Abfällen in einem Abfalltrennsystems (1).

### Gleiche Teile sind in allen Figuren mit denselben Bezugszeichen versehen.

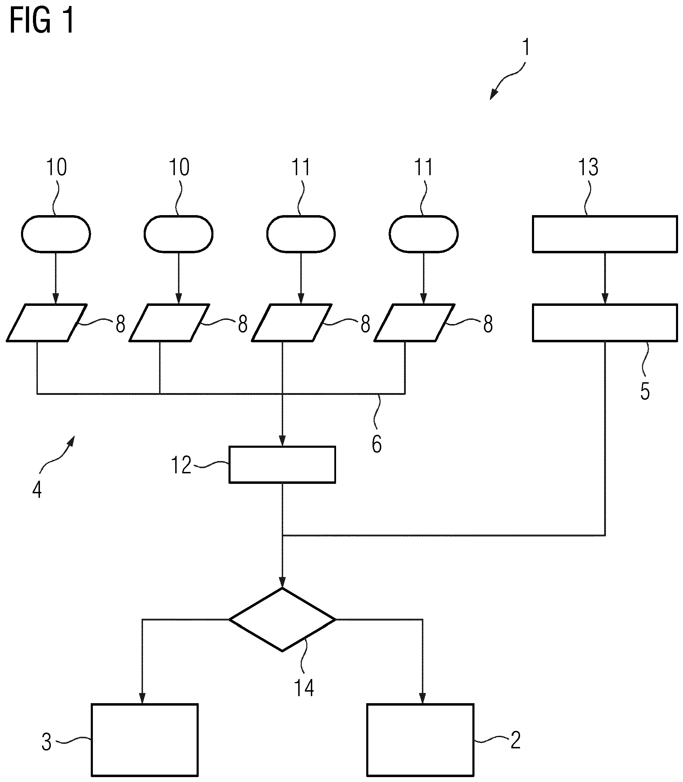

Das Abfalltrennsystems (1) gemäß FIG 1, das nicht unter die beanspruchte Erfindung fällt, ist eingebettet in ein nicht näher dargestelltes Analysegerät, welches zur Ausführung einer Vielzahl von Analysen von Proben ausgestaltet ist. Dazu umfasst das automatische Analysegerät eine Vielzahl von nicht gezeigten Pipettiereinrichtungen und Transporteinrichtungen sowie weiterhin eine Steuereinheit zum automatisierten Auswerten der Analysen.

Das Abfalltrennsystems (1) ist ausgestaltet zum Trennen von Abfall für ein automatisches Analysegerät. Das Abfalltrennsystems (1) umfasst einen ersten Abfallbehälter (2) und einen zweiten Abfallbehälter (3), eine Abfallverbringvorrichtung (4) zum Verbringen von Abfall in den ersten (2) oder den zweiten Abfallbehälter (3) und eine Steuervorrichtung (5) zur Steuerung der Abfallverbringvorrichtung (4).

Die Abfallverbringvorrichtung (4) umfasst ein Schlauchsystem (6), mit dem Waschstationen (10) verbunden sind. Anstelle das Schlauchsystems (6) kann alternativ auch ein Rohrsystem (7) Anwendung finden oder eine Kombination aus Schlauch- und Rohrsystem (nicht dargestellt). Weiter kann Flüssigkeit aus Küvetten (11) mittels des Schlauchsystems (6) abgeleitet werden. Die Abfallverbringvorrichtung (4) umfasst weiter Ventile (8) und eine Pumpe (12). Die Ventile (8) sind im Schlauchsystem (6) jeweils zwischen Waschstationen (10) bzw. Küvetten (11) und der Pumpe (12) angeordnet. Die Pumpe (12) ist zum Abpumpen von Flüssigkeiten aus Waschstationen (10) und Küvetten (11) in Abfallbehälter ausgestaltet. Weiter umfasst die Abfallverbringvorrichtung (4) ein Mehrwegeventil (14), das im Schlauchsystem (6) zwischen der Pumpe (12) und dem ersten Abfallbehälter (2) bzw. dem zweiten Abfallbehälter (3) angeordnet ist.

Die Steuervorrichtung (5) erhält über eine Datenzuführung (13) Informationen zugeführt, wenn eine oder mehrere der Waschstationen (10) bzw. Küvetten (11) besonders belastete Abwässer enthalten, die Festkörperpartikel (9) (nicht gezeigt) enthalten.

Die Steuervorrichtung (5) ist so konfiguriert, dass sie in Abhängigkeit der erhaltenen Informationen, das Mehrwegeventil (14) so schaltet, dass Abfall einer ersten Abfallklasse, der besonders belastet ist und z.B. Mikroplastikpartikel enthält, in den ersten Abfallbehälter (2) geleitet wird und Abfall einer zweiten Abfallklasse, der nicht besonders belastet ist, in den zweiten Abfallbehälter (3) geleitet wird.

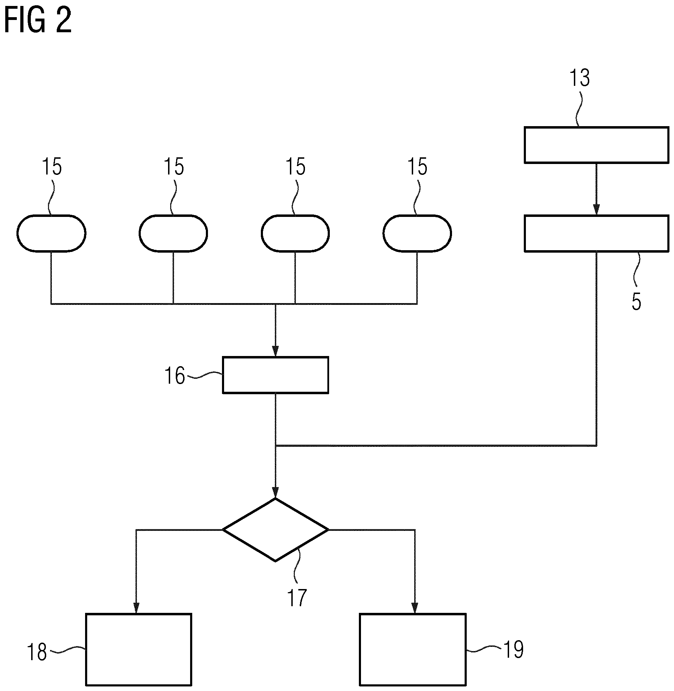

FIG 2 zeigt ein Flussidagramm betreffend die Prozessierung von Abfällen, z.B. in einem Abfalltrennsystems (1) wie in FIG 1 dargestellt.

Wenn Abfälle aus Gefäßen (15) entfernt und eine Leerung (16) durchgeführt werden soll, wird mittels der Steuervorrichtung (5) und der über die Datenzuführung (13) ihr zugegangen Informationen ermittelt, ob es sich bei den Abfällen aus den jeweiligen Gefäßen um besonders belasteten Spezialabfall (19) handelt, der Festkörperpartikel (9) (nicht gezeigt) umfasst, der eine spezielle Entsorgung benötigt, oder um nicht besonders belasteten Standardabfall (18), der keine spezielle Entsorgung benötigt. Mittels der Steuervorrichtung (5) wird eine entsprechende Zuordnung (17) der Abfälle aus jedem der einzelnen Gefäße (15) einzeln getroffen.

Mittels der Abfallverbringvorrichtung (4) wird dann Standardabfall (18) entsprechend in den zweiten Abfallbehälter verbracht und Spezialabfall (19) in den ersten Abfallbehälter.

### Bezugszeichenliste

- 1: Abfalltrennsystem
- 2: erster Abfallbehälter
- 3: zweiter Abfallbehälter
- 4: Abfallverbringvorrichtung
- 5: Steuervorrichtung
- 6: Schlauchsystem
- 7: Rohrsystem
- 8: Ventil
- 9: Festkörperpartikel
- 10: Waschstation
- 11: Küvette
- 12: Pumpe
- 13: Datenzuführung
- 14: Mehrwegeventil
- 15: Gefäß
- 16: Leerung
- 17: Zuordnung
- 18: Standardabfall
- 19: Spezialabfall

## Patentansprüche

1. Abfalltrennsystem (1) zum Trennen von Abfall für ein automatisches Analysegerät,
das Abfalltrennsystem (1) umfassend einen ersten Abfallbehälter (2) und einen zweiten Abfallbehälter (3), eine Abfallverbringvorrichtung (4) zum Verbringen von Abfall in den ersten (2) oder den zweiten Abfallbehälter (3) und eine Steuervorrichtung (5) zur Steuerung der Abfallverbringvorrichtung (4),
wobei die Steuervorrichtung (5) so konfiguriert ist, dass die Abfallverbringvorrichtung (4) Abfall einer ersten Abfallklasse in den ersten Abfallbehälter (2) verbringt und Abfall einer zweiten Abfallklasse in den zweiten Abfallbehälter (3) verbringt, wobei Abfall der ersten Abfallklasse nicht in den zweiten Abfallbehälter (3) und/oder Abfall der zweiten Abfallklasse nicht in den ersten Abfallbehälter (2) gelangt,
**dadurch gekennzeichnet, dass**
die Abfallverbringvorrichtung (4) einen automatisch steuerbaren Küvettengreifer und/oder eine automatisch steuerbare Pipettiervorrichtung umfasst,
wobei Abfall der ersten Abfallklasse und/oder der zweiten Abfallklasse sich beim Verbringen des Abfalls in den ersten (2) oder den zweiten Abfallbehälter (3) wenigstens teilweise, bevorzugt vollständig in einer Küvette, einer Pipettenspitze und/oder einem anderen Gefäß befindet,
wobei der Abfall der ersten Abfallklasse und/oder der zweiten Abfallklasse zusammen mit der Küvette, der Pipettenspitze und/oder dem Gefäß in den ersten (2) oder den zweiten Abfallbehälter (3) verbracht wird.

2. Abfalltrennsystem (1) nach Anspruch 1, wobei der Abfall der ersten Abfallklasse und/oder Abfall der zweiten Abfallklasse flüssigen Abfall umfasst, z.B. in Form von Dispersionen, oder es sich bevorzugt um flüssigen Abfall handelt.

3. Abfalltrennsystem (1) nach einem der vorhergehenden Ansprüche, wobei der Abfall der ersten Abfallklasse und/oder Abfall der zweiten Abfallklasse nichtklärbare Stoffe enthält.

4. Abfalltrennsystem (1) nach einem der vorhergehenden Ansprüche, wobei Abfall der ersten Abfallklasse Festkörperpartikel (9) wie z.B. Mikroplastikpartikel und/oder Latexpartikel enthält und wobei Abfall der zweiten Abfallklasse frei von Festkörperpartikeln (9) ist.

5. Abfalltrennsystem (1) nach einem der vorhergehenden Ansprüche, wobei die Abfallverbringvorrichtung (4) ein Schlauchsystem (6) und/oder Rohrsystem (7) umfasst.

6. Abfalltrennsystem (1) nach Anspruch 5, wobei die Abfallverbringvorrichtung (4) mindestens ein Ventil (8) umfasst, das mittels der Steuervorrichtung (5) steuerbar ist.

7. Abfalltrennsystem (1) nach einem der Ansprüche 2 bis 6, wobei ausschließlich Dispersionen und/oder flüssige Abfälle in die Abfallbehälter verbracht werden.

8. Abfalltrennsystem (1) nach einem der vorhergehenden Ansprüche, wobei es sich bei der Küvette, der Pipettenspitze und/oder dem Gefäß um Verbrauchsartikel handelt, die bevorzugt zur einmaligen Verwendung in einem automatischem Analysegerät ausgestaltet sind.

9. Automatisches Analysegerät umfassend ein Abfalltrennsystem (1) nach einem der Ansprüche 1 bis 8, wobei das automatische Analysegerät bevorzugt eine automatisch steuerbare Pipettiervorrichtung, einen automatisch steuerbaren Küvettengreifer und/oder eine Messeinrichtung zum optischen und/oder elektronischen quantitativen und/oder qualitativen Nachweis von mindestens einem Analyten in einer Probe umfasst.

10. Verfahren zum Trennen von Abfall in einem automatischen Analysegerät mittels eines Abfalltrennsystems (1),
das Abfalltrennsystem (1) umfassend einen ersten Abfallbehälter (2) und einen zweiten Abfallbehälter (3), eine Abfallverbringvorrichtung (4) zum Verbringen von Abfall in den ersten (2) oder den zweiten Abfallbehälter (3) und eine Steuervorrichtung (5) zur Steuerung der Abfallverbringvorrichtung (4),
wobei die Steuervorrichtung (5) die Abfallverbringvorrichtung (4) so steuert, dass Abfall einer ersten Abfallklasse in den ersten Abfallbehälter (2) verbracht wird und Abfall einer zweiten Abfallklasse in den zweiten Abfallbehälter (3) verbracht wird, wobei Abfall der ersten Abfallklasse nicht in den zweiten Abfallbehälter (3) und/oder Abfall der zweiten Abfallklasse nicht in den ersten Abfallbehälter (2) gelangt,
**dadurch gekennzeichnet, dass**
die Abfallverbringvorrichtung (4) einen automatisch steuerbaren Küvettengreifer und/oder eine automatisch steuerbare Pipettiervorrichtung umfasst,
wobei Abfall der ersten Abfallklasse und/oder der zweiten Abfallklasse sich beim Verbringen des Abfalls in den ersten (2) oder den zweiten Abfallbehälter (3) wenigstens teilweise, bevorzugt vollständig in einer Küvette, einer Pipettenspitze und/oder einem anderen Gefäß befindet,
wobei der Abfall der ersten Abfallklasse und/oder der zweiten Abfallklasse zusammen mit der Küvette, der Pipettenspitze und/oder dem Gefäß in den ersten (2) oder den zweiten Abfallbehälter (3) verbracht wird.

11. Verfahren nach Anspruch 10, wobei die Steuervorrichtung (5) mittels Informationen aus einer Datenbank ermittelt, ob Abfall der ersten Abfallklasse oder Abfall der zweiten Abfallklasse vorliegt.

12. Verfahren nach einem der Ansprüche 10 und 11, wobei das Abfalltrennsystem (1) nach einem der Ansprüche 1 bis 8 ausgestaltet ist.

13. Verwendung eines Abfalltrennsystems (1) nach einem der Ansprüche 1 bis 8 und/oder eines Verfahrens nach den Ansprüchen 10 bis 12 in einem automatischen Analysegerät, bevorzugt in einem automatischen Analysegerät nach Anspruch 9.

## Claims

1. Waste separation system (1) for separating waste for an automatic analyser,
the waste separation system (1) comprising a first waste container (2) and a second waste container (3), a waste disposal device (4) for disposing of waste into the first waste container (2) or the second waste container (3) and a control device (5) for controlling the waste disposal device (4),
wherein the control device (5) is configured such that the waste disposal device (4) disposes of waste of a first waste class into the first waste container (2) and waste of a second waste class into the second waste container (3), wherein waste of the first waste class does not get into the second waste container (3) and/or waste of the second waste class does not get into the first waste container (2),
**characterized in that**
the waste disposal device (4) comprises an automatically controllable cuvette gripper and/or an automatically controllable pipetting device,
wherein, when the waste is disposed of into the first waste container (2) or the second waste container (3), waste of the first waste class and/or of the second waste class is at least partly, preferably completely, contained in a cuvette, a pipette tip and/or some other vessel,
wherein the waste of the first waste class and/or of the second waste class is disposed of into the first waste container (2) or the second waste container (3) together with the cuvette, the pipette tip and/or the vessel.

2. Waste separation system (1) according to Claim 1, wherein the waste of the first waste class and/or waste of the second waste class comprises liquid waste, for example in the form of dispersions, or is preferably liquid waste.

3. Waste separation system (1) according to one of the preceding claims, wherein the waste of the first waste class and/or waste of the second waste class includes non-clarifiable substances.

4. Waste separation system (1) according to one of the preceding claims, wherein waste of the first waste class contains solid particles (9), such as for example microplastic particles and/or latex particles, and wherein waste of the second waste class is free from solid particles (9).

5. Waste separation system (1) according to one of the preceding claims, wherein the waste disposal device (4) comprises a hose system (6) and/or tube system (7).

6. Waste separation system (1) according to Claim 5, wherein the waste disposal device (4) comprises at least one valve (8) which is controllable by means of the control device (5).

7. Waste separation system (1) according to one of Claims 2 to 6, wherein exclusively dispersions and/or forms of liquid waste are disposed of into the waste containers.

8. Waste separation system (1) according to one of the preceding claims, wherein the cuvette, the pipette tip and/or the vessel are consumables which are preferably designed for one-time use in an automatic analyser.

9. Automatic analyser comprising a waste separation system (1) according to one of Claims 1 to 8, wherein the automatic analyser preferably comprises an automatically controllable pipetting device, an automatically controllable cuvette gripper and/or a measuring device for the optical and/or electronic quantitative and/or qualitative detection of at least one analyte in a sample.

10. Method for separating waste in an automatic analyser by means of a waste separation system (1),
the waste separation system (1) comprising a first waste container (2) and a second waste container (3), a waste disposal device (4) for disposing of waste into the first waste container (2) or the second waste container (3) and a control device (5) for controlling the waste disposal device (4),
wherein the control device (5) controls the waste disposal device (4) such that waste of a first waste class is disposed of into the first waste container (2) and waste of a second waste class is disposed of into the second waste container (3), wherein waste of the first waste class does not get into the second waste container (3) and/or waste of the second waste class does not get into the first waste container (2),
**characterized in that**
the waste disposal device (4) comprises an automatically controllable cuvette gripper and/or an automatically controllable pipetting device,
wherein, when the waste is disposed of into the first waste container (2) or the second waste container (3), waste of the first waste class and/or of the second waste class is at least partly, preferably completely, contained in a cuvette, a pipette tip and/or some other vessel,
wherein the waste of the first waste class and/or of the second waste class is disposed of into the first waste container (2) or the second waste container (3) together with the cuvette, the pipette tip and/or the vessel.

11. Method according to Claim 10, wherein the control device (5) determines by means of information from a database whether the waste concerned is waste of the first waste class or waste of the second waste class.

12. Method according to either of Claims 10 and 11, wherein the waste separation system (1) is designed according to one of Claims 1 to 8.

13. Use of a waste separation system (1) according to one of Claims 1 to 8 and/or of a method according to Claims 10 to 12 in an automatic analyser, preferably in an automatic analyser according to Claim 9.

## Revendications

1. Système (1) de séparation de déchets pour la séparation de déchets pour un appareil d'analyse automatique,
le système (1) de séparation de déchets comprenant un premier récipient (2) de déchets et un deuxième récipient (3) de déchets, un dispositif (4) pour l'évacuation de déchets dans le premier (2) ou dans le deuxième récipient (3) de déchets et un dispositif (5) de commande pour la commande du dispositif (4) d'évacuation de déchets,
dans lequel
le dispositif (5) de commande est configuré, de manière à ce que le dispositif (4) d'évacuation de déchets évacue du déchet d'une première classe de déchets dans le premier récipient (2) de déchets et évacue du déchet d'une deuxième classe de déchets dans le deuxième récipient (3) de déchets, dans lequel du déchet de la première classe de déchets n'arrive pas dans le deuxième récipient (3) de déchets et/ou du déchet de la deuxième classe de déchets n'arrive pas dans le premier récipient (2) de déchets,
**caractérisé en ce que**
le dispositif (4) d'évacuation de déchets comprend un préhenseur de cuve pouvant être commandé automatiquement ou un dispositif de pipetage pouvant être commandé automatiquement,
dans lequel du déchet de la première classe de déchets et/ou de la deuxième classe de déchets se trouve, lors de l'évacuation du déchet dans le premier (2) ou dans le deuxième récipient (3) de déchets au moins en partie, de préférence entièrement dans une cuve, une pointe de pipette et/ou une autre cuvette,
dans lequel du déchet de la première classe de déchets et/ou de la deuxième classe de déchets sont évacués ensemble avec la cuve, la pointe de pipette et/ou la cuvette, dans le premier (2) ou dans le deuxième récipient (3) de déchets.

2. Système (1) de séparation de déchets suivant la revendication 1, dans lequel le déchet de la première classe de déchets et/ou le déchet de la deuxième classe de déchets comprend du déchet liquide, par exemple sous la forme de dispersions, ou il s'agit de préférence de déchet liquide.

3. Système (1) de séparation de déchets suivant l'une des revendications précédentes, dans lequel le déchet de la première classe de déchets et/ou le déchet de la deuxième classe de déchets contient des substances ne pouvant pas être clarifiées.

4. Système (1) de séparation de déchets suivant l'une des revendications précédentes, dans lequel du déchet de la première classe de déchets contient des particules (9) de corps solide, comme par exemple des microparticules de matière plastique et/ou des particules de latex et dans laquelle du déchet de la deuxième classe de déchets est exempt de particules (9) de corps solide.

5. Système (1) de séparation de déchets suivant l'une des revendications précédentes, dans lequel le dispositif (4) d'évacuation de déchets comprend un système (6) à conduit souple et/ou un système (7) tubulaire.

6. Système (1) de séparation de déchets suivant la revendication 5, dans lequel le dispositif (4) d'évacuation de déchets comprend au moins une soupape (8), qui peut être commandée au moyen du dispositif (5) de commande.

7. Système (1) de séparation de déchets suivant l'une des revendications 2 à 6, dans lequel exclusivement des dispersions et/ou des déchets liquides sont évacués dans les récipients de déchets.

8. Système (1) de séparation de déchets suivant l'une des revendications précédentes, dans lequel la cuve, la pointe de pipette et/ou la cuvette est un article consommable, qui sont conformés de préférence pour être utilisés une seule fois dans un appareil d'analyse automatique.

9. Appareil d'analyse automatique comprenant un système (1) de séparation de déchets suivant l'une des revendications 1 à 8, dans lequel l'appareil d'analyse automatique comprend de préférence un dispositif de pipetage pouvant être commandé automatiquement, un préhenseur de cuve pouvant être commandé automatiquement et/ou un dispositif de mesure pour la détection optique et/ou électronique quantitative et/ou qualitative d'au moins un analyte dans un échantillon.

10. Procédé de séparation de déchets dans un appareil d'analyse automatique au moyen d'un système (1) de séparation de déchets, le système (1) de déchets comprenant un premier récipient (2) de déchets et un deuxième récipient (3) de déchets, un dispositif (4) pour l'évacuation de déchets dans le premier (2) ou dans le deuxième récipient (3) de déchets et un dispositif (5) de commande pour la commande du dispositif (4) d'évacuation de déchets,
dans lequel
le dispositif (5) de commande commande le dispositif (4) d'évacuation de déchets, de manière à évacuer du déchet d'une première classe de déchets dans le premier récipient (2) de déchets et du déchet d'une deuxième classe de déchets dans le deuxième récipient (3) de déchets, dans lequel du déchet de la première classe de déchets n'arrive pas dans le deuxième récipient (3) de déchets et/ou du déchet de la deuxième classe de déchets n'arrive pas dans le premier récipient (2) de déchets,
**caractérisé en ce que**
le dispositif (4) d'évacuation de déchets comprend un préhenseur de cuve pouvant être commandé automatiquement ou un dispositif de pipetage pouvant être commandé automatiquement,
dans lequel du déchet de la première classe de déchets et/ou de la deuxième classe de déchets se trouve, lors de l'évacuation du déchet dans le premier (2) ou dans le deuxième récipient (3) de déchets, au moins en partie, de préférence entièrement, dans une cuve, une pointe de pipette et/ou une autre cuvette,
dans lequel du déchet de la première classe de déchets et/ou de la deuxième classe de déchets sont évacués ensemble avec la cuve, la pointe de pipette et/ou la cuvette, dans le premier (2) ou dans le deuxième récipient (3) de déchets.

11. Procédé suivant la revendication 10, dans lequel le dispositif (5) de commande détermine au moyen d'informations à partir d'une base de données, s'il y a du déchet de la première classe de déchets et du déchet de la deuxième classe de déchets.

12. Procédé suivant l'une des revendications 10 et 11, dans lequel le système (1) de séparation de déchets est conformé suivant l'une des revendications 1 à 8.

13. Utilisation d'un système (1) de séparation de déchets suivant l'une des revendications 1 à 8 et/ou d'un procédé suivant les revendications 10 à 12 dans un appareil d'analyse automatique, de préférence dans un appareil d'analyse automatique suivant la revendication 9.
